# EUROPÄISCHE PATENTANMELDUNG

(11) **EP 1 195 360 A1**
(43) Veröffentlichungstag der Anmeldung: **10.04.2002**
(21) Anmeldenummer: 00118974.5
(22) Anmeldetag: 01.09.2000
(51) Int. Cl.: C03C 23/00, C03C 3/06

(54) **Verfahren zur Herstellung von SiO2-TiO2-Gläsern mit geringem thermischen Ausdehnungskoeffizient**

(71) Anmelder: Degussa AG, 40474 Düsseldorf (DE)
(72) Erfinder: Schneider, Gerrit, Dr., 63456 Hanau (DE); Deller, Klaus, Dr., 63512 Hainburg (DE); Mangold, Helmut, Dr., 63517 Rodenbach (DE); Wagner, Christine, 66121 Saarbrücken (DE); Clasen, Rolf, Prof. Dr., 66125 Saarbrücken (DE)

(57) **Zusammenfassung**

SiO₂-TiO₂-Gläser mit geringem thermischen Ausdehnungskoeffizient werden hergestellt, indem man einen Formkörper herstellt, der aus SiO₂-, SiO₂-TiO₂- oder TiO₂- Pulvern besteht und als Nebenkomponente eine titanhaltige Komponente enthält, die in amorphes TiO₂ umgewandelt wird.

## Beschreibung

Die Erfindung betrifft ein Verfahren zur Herstellung von SiO₂-TiO₂-Gläsern mit geringem thermischen Ausdehnungskoeffizient.

Bekannte SiO₂-TiO₂-glasbildende Systeme zeichnen sich durch ihre guten thermischen Eigenschaften, ihren hohen Brechungsindex und ihren niedrigen thermischen Ausdehnungskoeffizienten aus. Im Vergleich zu Kieselglas hat dieses System bei höheren Temperaturen eine gute Resistenz gegen Alkalidämpfe. Diese Eigenschaft findet zum Beispiel bei der Beschichtung von Lampen Anwendung (E. B. Yoldas, Method of conforming clear vitreous gel of silicatitania material. Patent, US 4278632, Westinghouse Electric Corp., USA, 8. 2.1980).

Eine weitere wichtige Eigenschaft des Systems SiO₂-TiO₂ ist der niedrige Ausdehnungskoeffizient. Dies ist für die Herstellung von optischen Bauteilen von Bedeutung, bei denen die Maßgenauigkeit über einen weiten Temperaturbereich eine große Rolle spielt (D. R. Shoup, Sol-gel method for making ultra-low expansion glass. Patent, US 4786618, Corning Glass Works (USA), 29. 05. 1998).

Wegen des großen kommerziellen Interesses an diesen Systemen wird nach Verfahren gesucht, die eine schnelle und kostengünstige Herstellung gewährleisten.

Eine bekannte Möglichkeit zur Produktion von binären TiO₂-SiO₂-Gläsern bietet das Schmelzen. Jedoch ist die Schmelztemperatur mit 1700 °C sehr hoch und während der Abkühlung der Glasschmelze kommt es sehr leicht zu Phasentrennung und Entglasung (Z. Deng, E. Breval and C. G. Pantano, Colloidal sol/gel processing of ultra-low expansion TiO₂/SiO₂ glass. J. Non-Cryst. Solids 100 (1988) 364-370).

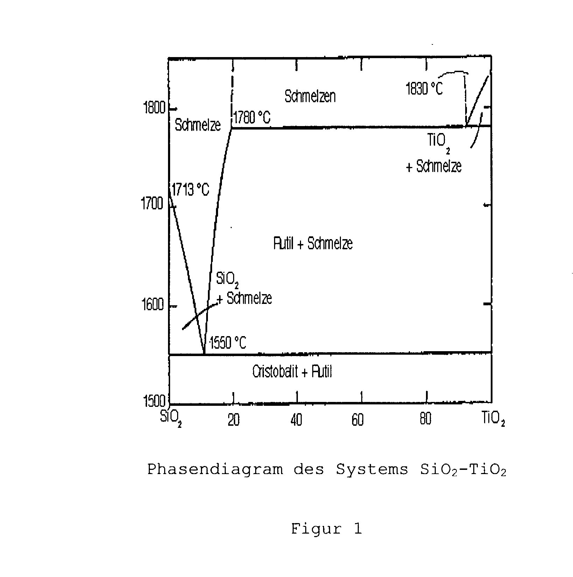

Das Phasendiagramm zeigt, daß die kristalline Form von TiO₂ selbst bei erhöhten Temperaturen eine geringe Löslichkeit in SiO₂ besitzt (Figur 1) (E. M. Levin, C. R. Robbin and H. F. McMurdie, Phasendiagramm SiO₂-TiO₂., in: Phase Diagrams for Ceramists., M. K. Reser, Editor. (1956), The American Ceramic Society: Columbus, Ohio (USA), S. 1).

Eine bekannte Alternative zum Aufschmelzen der Ausgangskomponenten bietet die Flammhydrolyse. Erste Forschungen auf diesem Gebiet wurden von Nordberg durchgeführt. Im US Patent Nr. 2326059 aus dem Jahr 1943 beschreibt er die Herstellung von TiO₂-SiO₂-Glas durch einen Flammenoxidationsprozess einer Mischung aus TiCl₄ und SiCl₄. Dabei entsteht ein Glas mit einem TiO₂-Gehalt von 5-11 Gew.-% und einem thermischen Ausdehnungskoeffizienten, der unter dem von Kieselglas liegt. Er schreibt dieses Verhalten dem direkten Austausch von SiO₂ mit TiO₂ zu (M. E. Nordberg, Glass having an expansion lower than that of silica. USA 2 326 059, Corning Glass Works, New York).

Weitere Forschungen auf diesem Gebiet wurden von P. C. Schultz durchgeführt. Er verwendete für den Prozess der Flammhydrolyse einen kleinen Zweibrennerofen, um kleine birnenförmige Formkörper ähnlich dem Patent von Nordberg herzustellen. Diese Glasformkörper werden bei 1700 °C auf einem Gefäß abgeschieden. Dabei konnten SiO₂-TiO₂-Gläser mit bis zu 16,5 Gew.-% TiO₂-Gehalt hergestellt werden. Gläser mit Titandioxidgehalt zwischen 12 und 17 Gew.-% sind metastabil und zeigen strukturelle Umbauten, die sich auf den thermischen Ausdehnungskoeffizienten auswirken. Größere Gehalte an Titandioxid verursachen Phasentrennung beziehungsweise Kristallisation. Ab 18,5 Gew.-% TiO₂ war das Glas semitransluzent weiß und bei 19,4 Gew.- % weiß und opak. Mittels Röntgenbeugung konnten kleine Mengen Rutil und Anatas festgestellt werden. Die Grenze für Glasbildung über Flammhydrolyse liegt zwischen 16,5 und 18,5 Gew.-% TiO₂. Weiterhin stellte Schultz fest, daß zwischen 0 und 10 Gew.-% TiO₂ und im Temperaturbereich zwischen 25 und 700 °C der thermische Ausdehnungskoeffizient mit steigendem Titanoxidgehalt negativ wird (P. C. Shultz, Binary Titania-Silica Glasses Containing 10 to 20 wt.-% TiO2. J. Am Ceram. Soc. 59 (1976) 214-219).

Weitere bekannte Forschungen zu diesem Thema wurden von J. E. Maxon durchgeführt. Sein Patent Nummer US 5970751 aus dem Jahr 1999 befasst sich mit der Herstellung von Silikatglas mit Titandioxidbeimengung durch Flammhydrolyse eine Mischung aus SiO₂- und TiO₂ -Precursor.

Relativ reine Metalloxide können durch thermische Zersetzung der Precursor und Abscheidung der resultierenden Oxide hergestellt werden. Die Precursor können in Dampfform überführt werden oder in Gas (zum Beispiel N₂) feinverteilt der Flamme zugeführt werden. Neben Titan- beziehungsweise Siliziumchloride werden als Precursor Octamethylcyclotetrasiloxane (OMCTS), Titanalkoxide oder Titanisopropoxide eingesetzt. Bei der Verwendung dieser chlorfreien Precursoren kann es zu Ablagerungen in den Leitungen, die die Mischung der beiden Precursoren transportieren, kommen. Dies führt zu unerwünschten Variationen in der chemischen Zusammensetzung der Pulver und schließlich wird das Abschalten der Apparatur zur Reinigung notwendig. Die Erfindung des vorliegenden Patent US5970751 soll diese Ablagerungen verringern, dadurch soll die Laufzeit bis zur nächsten Reinigung verlängert werden. Zusätzlich soll die Glasqualität verbessert werden.

Das Verfahren von Maxon entstand bei den Bemühungen, den Prozess von Chloriden auf umweltfreundlicheres Precursormaterial (OMCTS und Titanisopropoxid) umzustellen. Alkoxide von Übergangsmetallen sind für ihre Empfindlichkeit gegenüber Licht und Feuchtigkeit bekannt. Metallalkoxide werden mit Feuchtigkeit zu Hydroxiden und den Oxiden des entsprechenden Metalls oxidiert. Als Quelle für die Feuchtigkeit hat sich das OMCTS herausgestellt. Es ist darauf zu achten, daß der Wassergehalt unter 2 ppm liegt, damit der weiße Niederschlag vermieden werden kann. Es hat sich ebenfalls gezeigt, daß die Temperatur der Leitungen, durch die die Precursormischungen fließen, kontrolliert werden muss. Ist sie zu niedrig, können sich die Bestandteile durch Kondensation niederschlagen (E. J. Maxon, Fused SiO₂-TiO₂ glass. Patent, US 5970751, Corning INC (USA), 22. 9. 1998).

Eine weitere bekannte andere Möglichkeit, klares Titanoxid-Silikatglas mit 7,4 Gew.-% Titandioxid herzustellen, bietet Corning schon seit 20 Jahren mit dem CVD-Verfahren . Dabei handelt es sich um einen Gasphasenabscheidungsprozess. Die Temperaturen liegen zwischen 200 und 2000 °C. Je nach Art der Energiezufuhr spricht man von thermischer, plasma-, photonen- oder laseraktivierter Gasphasenabscheidung. Mit dieser Methode ist die Herstellung eines klaren Glases mit 16 Gew.-% TiO₂ möglich, jedoch ist die Abscheiderate relativ gering. Um Glas mit verschiedenen Formen zu erhalten, ist eine maschinelle Bearbeitung notwendig (W. T. Minehan, G. L. Messing and C. G. Pantano, Titania-silica glasses prepared by sintering alkoxide derived spherical colloids. J. Non-Cryst. Solids 108 (1989) 163-168).

Am häufigsten eingesetzte Methode zur Herstellung von SiO₂-TiO₂-Gläser ist der Sol-Gel-Prozess. Dabei handelt es sich in vielen Fällen um die Hydrolyse und Kondensation von organo-metallischen Verbindungen. In seinem Patent Nummer US4278632 zeigte Yoldas eine Methode, mit deren Hilfe klares Glasmaterial hergestellt werden kann, welches hauptsächlich Siliziumdioxid und Titandioxid enthält, wobei der Titandioxidgehalt bis zu 40 Gew.-% betragen kann, ohne daß die Bestandteile aufgeschmolzen werden müssen.

Für die Herstellung dieser Gläser wird separat eine klare organische Lösung von teilweise hydrolysierten Alkoxiden von einer Komponente des binären Systems hergestellt. Zu dieser Lösung wird die andere Komponente des binären Systems in Form von Alkoxiden oder einer klaren organischen, teilweise hydrolysierten Lösung der Alkoxide hinzugefügt. Zu der resultierenden Reaktionslösung wird zusätzlich Wasser hinzugegeben, um die Hydrolyse der Silizium- und Titanalkoxide zu vervollständigen. Nach der Hydrolyse wird das Material getrocknet und dann auf Temperaturen von 400 °C bis 600 °C erwärmt, um die restlichen organischen Bestandteile zu entfernen und ein klares binäres Material zu produzieren. Mit dieser Methode kann auch ein sehr aktives Glaspulver hergestellt werden, welches nach der Formgebung bei Temperaturen von 1200 °C für 2 Stunden gesintert wird.

Bekannte Ergebnisse erzielten die Japaner T. Hayashi et al.. Sie mischen 0,01 - 0,05 Mol Titantetraisopropoxid und 0,2 - 0,25 Mol Tetraethylorthosilikat (TEOS) in 150 cm³ Ethanol bei Raumtemperatur. Eine Mischung aus Wasser, HCl und 30 cm³ Ethanol wird unter ständigem Rühren zur Alkoxidlösung gegeben zum Start der Hydrolyse zugegeben. Das molare Verhältnis von Wasser und HCl zu den Alkoxiden beträgt 2:50. Die Gelierung der Formkörper erfolgt innerhalb von 1 bis 10 Tagen in Abhängigkeit von den Hydrolysebedingungen. Die Gele werden 3 Monate getrocknet und anschließend langsam auf 100 °C erwärmt, bei dieser Temperatur einen Tag gehalten und danach mit 10 °C/min auf 800 °C erhitzt. Es kann in diesem Zusammenhang ebenfalls gezeigt werden, daß Titantetraisopropoxid wesentlich schneller hydrolysiert als TEOS. Dies führt dazu, daß bei einer Mischung aus beiden Substanzen Titantetraisopropoxid schneller hydrolysiert und eine unerwünschte Phasentrennung eintritt. Dies kann vermieden werden, in dem nur eine begrenzte Menge von Wasser und HCl in Ethanol gelöst wird und diese Lösung sehr langsam zu der Alkoxidlösung hinzufügt wird. Optimale Bedingungen, um klare Gele zu erhalten, sind durch folgende molare Verhältnisse H₂O/Alkoxid =16, HCl/Alkoxid = 0,03 charakterisiert.

Zur Herstellung des Glases werden die Proben auf 800 °C erwärmt. Transparentes Glas kann nur aus klaren Gelen erzielt werden. Mittels der Methode von Hayashi et al. kann Glas mit 3,4 bis 25 Gew.-% TiO₂ hergestellt werden. Gläser, die weniger als 12,9 Gew.-% enthalten, haben einen thermischen Ausdehnungskoeffizient wie die, die durch Flammhydrolyse hergestellt wurden. Enthalten die Gläser Anatas Kristalle, so ist die thermische Ausdehnung größer als erwartet. Bei einer weiteren Erwärmung auf 1100 °C bleiben Gläser mit 10,4 Gew.-% transparent. Bei Gläser mit 20 Gew.-% entsteht bei 900 °C die kristalline Phase Anatas (T. Hakashi, T. Yamada and H. Saito, Preparation of titania-silica glasses by the gel method. J. Mater. Sci. 18 (1983) 3137-3142).

Weitere Arbeiten auf diesem Gebiet sind von D. R. Shoup bekannt. Sein Patent mit der Nummer US4786618 von 1988 beschreibt ein Verfahren zur Herstellung von ultra-low-expansion Glas (ULE) aus SiO₂ und TiO₂, dessen Eigenschaften bisher nur von Gläsern erreicht werden, die aus der Gasphase abgeschieden werden. Diese Gläser entstehen aus einer stabilen Alkalisilikat Lösung mit kolloidalem TiO₂ mit einem pH-Wert von > 9 über ein Silikatgel, in dem kolloidales TiO₂ homogen verteilt ist. Nach dem die Alkaliionen entfernt sind, wird das Gel getrocknet und zu einem klaren, dichten Glas verfestigt. Es ist frei von Inhomogenitäten und hat einen niedrigeren Ausdehnungskoeffizienten als Kieselglas. Die so hergestellten Gläser enthalten zwischen 3 und 10 Gew.-% TiO₂, zwischen 90 und 97 Gew.-% SiO₂, 100-200 ppm Alkalimetalle und 1-200 ppm Eisen. Der durchschnittliche thermische Ausdehnungskoeffizient beträgt zwischen 0-300 °C 5 ·10 -7/K, welcher dem von reinem Kieselglas entspricht.

Der Artikel aus dem Jahr 1988 von Z. Deng beschreibt eine weitere Methode über einen Sol-Gel-Prozess ULE-Gläser aus dem System SiO₂-TiO₂ herzustellen. Es können Gläser mit einem TiO₂-Gehalt zwischen 0 und 9 Gew.-% produziert werden. Dazu wird kolloidales Siliziumdioxid-Pulver (Aerosil A200) in einer Titandioxidlösung dispergiert. Dabei spielt die Stabilität der Lösung eine große Rolle, da SiO₂-Teilchen darin homogen verteilt werden müssen, um schließlich einen homogenen Formkörper zu erreichen. Frühere Publikationen haben gezeigt, daß Titanglycoxide (hergestellt durch Hydrolyse und Verkettung von Titanisopropoxiden in Ethylenglycol/Zitronensäure bei 120 °C) geeignet sind. Die Karbonisation der übrigen Glycoxide bewirkt häufig Kristallisation während der Sinterung. Eine saure Titanoxidlösung wird durch Hydrolyse und Peptisation von Titanisopropoxiden in einer Vielzahl von einfachen Säuren, wie Salzsäure oder Salpetersäure, erreicht.

Zur Herstellung dieser Lösungen wird Titanisopropoxide mit Säure gemischt und dann Wasser hinzugegeben. Nach 30 bis 60 Minuten Rühren ist die Lösung klar. Die Titanoxidlösung ist für 2 bis 3 Tage bei Raumtemperatur stabil. Nachdem die Formkörper hergestellt sind, erfolgt eine Gelierung in 4 Tagen bei 25 ° C beziehungsweise in 2 Tagen bei 60 °C. Daran schließt sich eine Wärmebehandlung bei 500 °C an, um absorbiertes Wasser und übrige organischen Bestandteile zu entfernen. Dies kann mit thermogravimetrischen Messungen nachgewiesen werden. Dabei wird wegen des Wasserverlustes zwischen 25 und 125 °C ein Massenverlust von 3-4 % festgestellt. Zwischen 250 und 450 °C ergibt sich ein weiterer Massenverlust von 1-2 %. Als vorteilhaft für die Sinterung erweist sich eine Aufheizrate von 20 bis 50 °C/min und zwei Plateaus, eins bei 1200-1250 °C und das andere bei 1450-1500 °C. Als Ofenatmosphäre wird Luft verwendet. Zwischen 1200 und 1250 °C findet die größte Schrumpfung statt. Hier entweicht die Restfeuchtigkeit (beziehungsweise OH-Gruppen), welche bei höheren Temperaturen zur Blasenbildung führt. Zwischen 1450 und 1500 °C erreicht das Glas die höchste Dichte und wird klar. Verschiedene thermische Analysen stellen einen Zusammenhang zwischen dem Titandioxidgehalt und einer exothermen Reaktion zwischen 1200 und 1400 °C her. Hier findet vermutlich eine Reaktion zwischen Siliziumdioxid und Titandioxid statt. Allerdings ist eine quantitative Analyse noch nicht möglich. Es hat sich gezeigt, daß Gele mit einem höheren Titanoxidgehalt schwieriger zu sintern sind.

Ebenso kann Deng eine Verbesserung der Transparenz der Gläser feststellen, wenn bis 1200 °C in He -Atmosphäre gesintert wird. Zusätzlich zeigt sich, daß die Tendenz zur Blasenbildung weiter reduziert wird. Ein weiterer wichtiger Schritt nach Deng in der Herstellung von rißfreien Gläsern ist die Trocknung. Die gebildeten Gelkörper sind mechanisch sehr schwach, so daß während der Entformung und Trocknung Risse entstehen könnten. Die lineare Schrumpfung während der Trocknung beträgt 24 %. Die lineare Schrumpfung während des Sinterns beträgt 32 % und findet hauptsächlich zwischen 1000 und 1200 °C statt.

Mineham beschreibt die Herstellung von Titan-Silikatglas über die Sinterung von TiO₂-SiO₂-Pulver. Hierfür wird das Pulver aus den organischen Precursor hergestellt. Die anschließende Formkörperherstellung erfolgt über pulvertechnologischem Weg. Hier sind transparente Gläser mit bis zu 8,5 Gew.-% TiO₂ möglich. Die Charakterisierung der Formkörper ergibt, daß diese mit einem TiO₂-Gehalt von < 8,5 Gew.-% keine Kristallisation zeigen. Bei Formkörpern mit 8,5 Gew.-% wird gelegentlich Kristallisation beobachtet. Die chemische Zusammensetzung der kristallinen Phase kann wegen ihrer Seltenheit und Größe nicht identifiziert werden. Steigt der Titandioxidgehalt auf 11,5 Gew.-% an, erhöht sich auch der kristalline Anteil. Es werden Bereiche mit Anatas und solche mit Rutil entdeckt.

Mineham kann nachweisen, daß die Phasentrennung in Gläsern mit 8,5 Gew. % TiO₂ das Ausdehnungsverhalten verändert. Gläser mit 11,5 Gew.-% TiO₂, bei denen Kristallisation und Phasentrennung stärker auftreten als bei Gläsern mit 8,5 Gew.-%, haben eine thermische Ausdehnung ähnlich der Gläser mit 3,1 Gew.-% TiO₂. Im allgemeinen liegt der thermische Ausdehnungskoeffizient von 2,6 und - 0,38·10-7 /°C bei Temperaturen zwischen 25 und 700 °C und einem Titandioxidgehalt von 3,1 bis 8,5 Gew.-%. Das Pulver und das entsprechende Glas wird mit Hilfe von FTIR untersucht. Es ergibt sich eine Absorptionsbande bei 3660 cm-1, die über die Anzahl der OH-Gruppen Auskunft gibt. Außerdem können die für reines Kieselglas charakteristischen Banden bei 1100-1200, 800 und 460 cm-1 in Titandioxid-SiO₂-Pulvern und Gläsern nachgewiesen werden. Die Absorptionsbande zwischen 920 und 960 cm-1 wird durch Titanoxidtetraeder verursacht.

Mineham beschreibt die Herstellung von SiO₂-TiO₂-Formkörpern mit einer bimodalen Porengrößenverteilung durch spontane Emulgation von teilweise hydrolysierten Alkoxiden wie Si(OC₂H₅)4, H₂O C₂H₅OH und HCl im molaren Verhältnis 0,944:1,3:9:0,0027, die 90 min in einem geschlossenen Behälter bei 25 °C reagieren, bevor 0,056 Mol Titanisopropoxid hinzugefügt werden. 120 Minuten nach der Zugabe wird die Emulgation induziert, indem im Verhältnis 2:1 3 % NH₄OHaq zur obigen Zusammensetzung hinzugefügt werden. Die durchschnittliche Teilchengröße des Pulvers ergibt sich zu 130 nm und die BET-Oberfläche liegt bei 310 m²/g. Die Formkörper haben eine bimodale Porengrößenverteilung mit Poren von 6 nm und 50 nm.

Das Verdichtungsverhalten der Formkörper, die über kolloidale Gelierung hergestellt werden, wird studiert. Dabei handelt es sich um homogene Formkörper mit einer hohen Packungsdichte. Die Proben werden an Luft unter Normalbedingungen getrocknet.

Formkörper zwischen 0,2 g und 0,4 g werden isotherm in einem Mullitofen gesintert. Alle Temperaturprogramme enthalten eine Haltezeit von 2 h bei 900 °C, um eine strukturelle Relaxation vor der Verdichtung zu ermöglichen. Die Aufheizrate beträgt 10 °K/min. Die Proben werden in Luft bei 1075, 1150, 1200 und 1250 °C gesintert. Die Sinterzeit von 0 ist definiert als der Moment, bei dem der Ofen die Sintertemperatur erreicht.

Bei 1075 °C findet eine Verdichtung nur durch intrapartikuläre Sinterung statt. Wegen der Schrumpfung der Teilchen wird die Porengrößenverteilung enger. Bei 1175 °C verändert sich die Steigung der Kurve wegen der interpartikulären Verdichtung, die wegen den größeren Poren langsamer als die intrapartikuläre Verdichtung ist. Ab 1200 °C wird keine Veränderung der Verdichtungsrate mehr, wegen der schnellen und vollständigen intrapartikulären Verdichtung während des Aufheizens bis zur Sintertemperatur beobachtet. Über 1200 °C verändert sich die Verdichtungsrate nicht mehr wegen der schnellen und vollständigen Schrumpfung der intrapartikulären Porosität. Während des zweiten Sinterschritts findet die Verdichtung nur über interpartikuläre Porenschrumpfung statt. Bei einer relativen Dichte von 84 % zeigt sich ein Netz großer elliptischer Poren von 0,1 µm. Bei relativen 96 % Dichte sind relativer Dichte sind die feinen Poren eliminiert und die Größe der großen Poren reduziert (W. T. Minehan, M. R. Schaefer and G. L. Messing, Sintering of titania-silica powder compacts with a bimodal pore-size distribution. J. Non-Cryst. Solids 147 & 148 (1992) 582-587).

Das Sinterverhalten von binären glasbildenden SiO₂-TiO₂-Systemen wird von Ki-Dong Kim untersucht. Die amorphen Gele werden über Hydrolyse und Kondensation von organometallischen Verbindungen und Wasser hergestellt. Dazu wird eine bestimmte Menge von Ethylsilikat und Titanisopropoxid bei Raumtemperatur in 100 cm³ Isopropanol eingerührt. Es werden Wasser und 0,5 N HCl (Katalysator) für die Hydrolyse hinzugefügt. Das Gel wird drei Tage bei 70 °C getrocknet. Das getrocknete transparente Gel wird pulverisiert und nochmals bei 600 °C getrocknet, um die organischen Bestandteile zu entfernen. Das entstandene Pulver hat eine durchschnittliche Korngröße von 10 µm.

Die Formkörper werden zuerst uniaxial mit 135 MPa gepresst, bevor sie durch kaltisostatisches Pressen mit 270 MPa weiterverarbeitet werden. Nach der Trocknung bei 120 °C (12 Stunden) ergibt sich eine Gründichte von 0,7 ± 0,02 der theoretischen Dichte. Die Sinterkurve in Abhängigkeit von der Temperatur kann in drei Regionen aufgeteilt werden: einmal T<Tsin, Tsin<T<Tcryst und T>Tcryst. Diese charakteristischen Punkte werden durch das Anlegen einer Tangenten an die entsprechenden Stellen der Kurve bestimmt. Bei Temperaturen unter Tsin ist die Schrumpfung noch vernachlässigbar klein. In dem Bereich Tsin<T<Tcryst steigt die Schrumpfung wegen der sinkenden Viskosität der glasigen Phase mit steigender Temperatur. Im Temperaturbereich über Tcryst stagniert die Schrumpfung wegen der einsetzenden Kristallisation. Ab dieser Temperatur erfolgt die Sinterung langsamer mit steigender Temperatur. Die Kristallisation reduziert den Anteil der glasigen Phase und wird schließlich zum Hindernis für den viskosen Fluss der übrigen glasigen Phase. In Formkörpern, die über der Temperatur Tcryst gesintert werden, kann mittels Pulverdiffraktometrie Cristobalit als kristalline Phase festgestellt werden. Nach der Methode von Kim Dong Kim ist es möglich, Gläser mit bis zu 8 Mol-% TiO₂ herzustellen. Ab 8 Mol-% kommt es zu Kristallisation während der Wärmebehandlung.

Kim Dong Kim hat ebenfalls gezeigt, daß für den Sinterprozess der viskose Fluss der Primärteilchen bestimmend ist. Zu Beginn der Sinterung liegt eine Viskosität von 1011 bis 1012 dPa·s vor. Außerdem wird von Kim Dong Kim der Einfluß von TiO₂ auf die Glasstruktur und die Viskosität untersucht. Es hat sich gezeigt, daß die Zugabe von TiO₂ zu Kieselglas die Viskosität dieses Glases senkt. Die Sintertemperatur und der thermische Ausdehnungskoeffizient sinken mit steigendem TiO₂-Gehalt. Der thermische Ausdehnungskoeffizient sinkt demnach mit sinkender Viskosität. Dies lässt sich vermutlich darauf zurückführen, daß TiO₂ als Netzwerkbildner wirken kann, d. h. es entstehen [TiO₄] - Tetraeder, und schließlich hat man ein dichteres Glasnetzwerk. Jedoch haben Untersuchungen mit der IR-Spektroskopie gezeigt, daß TiO₂ das Netzwerk eher schwächt als stärkt. Eine exakte Klärung dieses Phänomens steht noch aus (K.-D. Kim and T. Khalil, Sintering behavior of gel powder in binary glass-forming SiO2-TiO2 system. J. Non-Cryst. Solids 195 (1996) 218-222).

Die bekannten Verfahren weisen den Nachteil auf, daß sie über die direkte Gasphasenabscheidung von SiO₂-TiO₂-Gläsern relativ langsam sind und nur geringe Abscheideraten ermöglichen. Dadurch entstehen hohe Produktionskosten. Größere Formkörper können über die Sol-Gel-Verfahren hergestellt werden. Jedoch sind die mit diesem Verfahren herstellbaren Gründichten sehr gering, so daß hohe Schrumpfraten beim Trocknen und Sintern auftreten. Daher müssen diese Prozessschritte sehr langsam durchgeführt werden, um eine Rissbildung zu vermeiden. Dies erhöht wiederum die Produktionskosten. Auch mit einer Zugabe von Degussa Aerosil 200 an Stelle des teueren Ausgangsmaterials TEOS konnte die Gründichte der Formkörper nicht wesentlich erhöht werden.

Es besteht somit die Aufgabe der Erfindung ein Verfahren zur Herstellung von SiO₂-TiO₂-Gläsern zu entwickeln, das diese Nachteile nicht aufweist.

Gegenstand der Erfindung ist ein homogenes, binäres SiO₂-TiO₂-Glas mit geringem thermischen Ausdehnungskoeffizient.

Gegenstand der Erfindung ist ein Verfahren zur Herstellung von SiO₂-TiO₂-Gläsern mit geringem thermischen Ausdehnungskoeffizent, insbesondere eines homogenen binären SiO₂-Glases mit geringem thermischen Ausdehnungskoeffizient ≤ 0,5·10-6/K, welches dadurch gekennzeichnet ist, daß man einen Formkörper mit einer relativen Gründichte > 40 % herstellt, der in der Hauptkomponente aus dichten SiO₂-, SiO₂-TiO₂- oder TiO₂-Pulvern oder einer Mischung aus diesen Pulvern besteht und als Nebenkomponente eine titanhaltige Komponente enthält, die sich spätestens bei der abschließenden Sinterung des Formkörpers in amorphes TiO₂ umwandelt.

Die titanhaltige Komponente kann nach der Trocknung des Formkörpers in die offenen Poren des Formkörpers eingebracht werden.

Die eingesetzten Pulver können einen Durchmesser zwischen 5 nm und 20 µm aufweisen.

Die eingesetzten Pulver können eine mindestens bimodale Verteilung aufweisen und einen Formkörper mit bimodaler Porenverteilung ergeben.

Die eingesetzten Pulver können eine bimodale Verteilung von 5 bis 100 nm, vorzugsweise von 8 bis 80 nm, und 1 bis 50 µm, vorzugsweise 5 bis 20 µm, aufweisen.

Die lineare Trockenschrumpfung kann 0,1 bis 10 % betragen.

Die lineare Sinterschrumpfung kann weniger als 30 % betragen.

Erfindungsgemäß kann ein dichtes SiO₂-TiO₂-Glas aus dem Formkörper durch Sinterung bei Temperaturen < 1500 °C entstehen.

Das erfindungsgemäße Verfahren löst die vorhandenen Probleme dadurch, daß Formkörper mit einer höheren Gründichte aus im Hauptbestandteil aus dichten, vorrangig über die Gasphasenabscheidung hergestellten Teilchen aus Kieselglas, amorphen TiO₂ oder Mischungen aus nanoskaligen SiO₂-TiO₂-Glaspulvern hergestellt werden und nach der Formgebung zu einem homogenen, dichten Glas unterhalb der Schmelztemperatur gesintert werden.

Als Nebenkomponente können ein Titanalkoxid oder andere titanhaltige, in TiO₂ überführbare Salze hinzugegeben werden, die bereits der Ausgangssuspension aus Kieselglasteilchen oder nanoskaligen SiO₂-TiO₂-Glaspulvern hinzugefügt werden oder zur Nachverdichtung eines porösen Formkörpers aus nanoskaligen Kieselglasteilchen oder nanoskaligen SiO₂-TiO₂-Glaspulvern eingesetzt werden. Das Titanalkoxid kann durch Hydrolyse und Kondensation beziehungsweise das titanhaltige Salze durch entsprechende Reaktionen nach der Formgebung beziehungsweise bei der Nachverdichtung nach vollständigem Füllen der Poren des offenporigen Grünkörpers in amorphes TiO₂ überführt werden.

Als Kieselglaspulver können handelsübliche pyrogene Kieselsäuren (zum Beispiel Aerosile der Fa. Degussa AG) eingesetzt werden. Als besonders geeignetes Ausgangspulver hat sich Aerosil OX50 erwiesen. Dieses Pulver weist eine breite Teilchenverteilung von 10 bis 100 nm mit einem Maximum der Durchmesserverteilung bei ca. 50 nm auf. Als vorteilhaft hat es sich zur Erhöhung der Gründichte der Formkörper erwiesen, die Teilchenverteilung durch Zugabe größerer Teilchen (zum Beispiel Degussa Elsil) zu größeren Durchmessern zu verschieben. Die zusätzlich Zugabe von feinsten Aerosilen, wie beispielsweise Aerosil 380, erhöht in kleinen Mengen (0,1 bis 15 Gew.-%) die Grünfestigkeit der Formkörper.

Die erfindungsgemäßen Grünkörper sind dadurch gekennzeichnet, daß diese durch eine entsprechende Zusammensetzung der Ausgangspulver eine bimodale Porenverteilung aufweisen.

Diese Ausgangspulver beziehungsweise Substanzen können mit bekannten Formgebungsverfahren so verdichtet werden, daß ein Formkörper möglichst hoher Gründichte und homogener Porenverteilung entsteht. Für einfache Geometrien eignet sich das Trockenpressen, jedoch sind mit diesem Formgebungsverfahren Agglomerate in den Ausgangspulvern nur schwer aufzulösen. Dies führt leicht zu Inhomogenitäten in den Formkörpern. Daher hat es sich als vorteilhaft erwiesen, die Ausgangspulver in einer Flüssigkeit, vorrangig reinem Wasser, zu dispergieren. Hierbei können bekannte Dispergierwerkzeuge wie Hochgeschwindigkeitsrührer und Dissolver eingesetzt werden. Zur Vermeidung von metallischen Abrieb, der die SiO₂-TiO₂-Gläser verunreinigen kann, können die Oberflächen mit zähelastischen Kunststoffen versehen werden. Hierdurch können sowohl unerwünschte Einfärbungen als auch die Einschleppung von Kristallisationskeimen verhindert werden.

Je nach Füllgrad und Teilchengrößenverteilung kann eine mehr oder minder viskose Suspension entstehen, wobei eine bessere Dispergierung bei geringeren Viskositäten erreicht werden kann. Die hochviskosen Suspensionen (Massen) können direkt in eine Form eingestrichen oder extrudiert werden. Bei den geringer gefüllten niedrigviskosen Suspensionen kann eine Abscheidung der dispergierten Teilchen notwendig sein, um die gewünschte hohe Gründichte des Formkörpers zu erreichen. Hierfür eignen sich beispielsweise die dem Fachmann bekannten elektrophoretischen Verfahren sehr gut. Die Zugabe von Alkoxiden oder anderen reaktiven Ti-Salzen erfordert, daß die Reaktionen erst zeitverzögert nach der Formung der Masse beziehungsweise Suspension einsetzt. Dies hierfür notwendigen Bedingungen und Additive sind aus der Sol-Gel Chemie bekannt.

Nach der Formgebung aus Suspensionen oder Massen wird der Formkörper getrocknet. Bei der erfindungsgemäßen Ausführung kann die lineare Trockenschrumpfung zwischen 0,1 und 10 % liegen. Daher ist eine konventionelle Trocknung in wenigen Stunden, wie diese aus der Herstellung feinkeramischer Produkte bekannt ist, völlig ausreichend. Eine wochenlange konventionelle Trocknung oder eine verkürzte Trocknung unter überkritischen Bedingungen im Autoklaven, die zur Trocknung von großen, über das Sol-Gel Verfahren hergestellten Formkörpern vielfach notwendig ist, ist bei dem erfindungsgemäßen Verfahren nicht erforderlich. Dadurch werden erhebliche Produktionskosten eingespart.

Nach der Trocknung kann eine zusätzliche Tränkung des Formkörpers mit einer Titanalkoxidlösung oder einem anderen reaktiven Ti-Salz erfolgen. Als Lösungsmittel werden hierfür Flüssigkeiten eingesetzt, die eine geringere Oberflächenspannung als die Flüssigkeit der Suspension beziehungsweise Masse hat. Dadurch kann dieses Lösungsmittel nach der Reaktion der gelösten Komponenten schnell entfernt werden, ohne daß die Gefahr der Bildung von Trockenrissen besteht. Die verwendeten Titanalkoxide und reaktiven Ti-Salze sind dadurch gekennzeichnet, daß sich diese sich spätestens bei der abschließenden Sinterung in TiO₂ und flüchtige Komponenten umwandeln. Der Anteil des TiO₂ im Glas beträgt zwischen 0,1 und 15 Gew.-%. Das TiO₂ vermischt sich über Diffusion homogen mit der SiO₂-Matrix, ohne daß sich kristalline Phasen bilden.

Abschließend wird der Formkörper zu einen dichten, transparenten Glas gesintert. Die Bildung von Blasen in dem Glas kann dadurch reduziert werden, indem in Helium oder Vakuum gesintert wird. Bei langgestreckten Formkörpern (zum Beispiel Stäben und Rohren) verringert eine Zonensinterung die Gefahr des Einschlusses von Gasblasen.

## Patentansprüche

1. Verfahren zur Herstellung von SiO₂-TiO₂-Gläsern mit geringem thermischen Ausdehnungskoeffizient, insbesondere eines homogenen binären SiO₂-TiO₂ Glases mit geringem thermischen Ausdehnungskoeffizient ≤ 0,5·10-6/K **dadurch gekennzeichnet, daß** man einen Formkörper mit einer relativen Gründichte > 40 % herstellt, der in der Hauptkomponente aus dichten SiO₂-, SiO₂-TiO₂-, oder TiO₂-Pulvern oder einer Mischung aus diesen Pulvern besteht und als Nebenkomponente eine titanhaltige Komponente enthält, die sich spätestens bei der abschließenden Sinterung des Formkörpers in amorphes TiO₂ umwandelt.

2. Verfahren nach Anspruch 1, **dadurch gekennzeichnet, daß** die titanhaltige Komponente nach der Trocknung des Formkörpers in die offenen Poren des Formkörpers eingebracht wird.

3. Verfahren nach Anspruch 1, **dadurch gekennzeichnet, daß** die eingesetzten Pulver einen Durchmesser zwischen 5 nm und 20 µm haben.

4. Verfahren nach Anspruch 3, **dadurch gekennzeichnet, daß** die eingesetzten Pulver eine mindestens bimodale Verteilung aufweisen und einen Formkörper mit bimodaler Porenverteilung ergeben.

5. Verfahren nach Anspruch 4, **dadurch gekennzeichnet, daß** die eingesetzten Pulver eine bimodale Verteilung von 5 bis 100 nm, vorzugsweise von 8 bis 80 nm, und 1 bis 50 um, vorzugsweise 5 bis 20 µm, aufweisen.

6. Verfahren nach Ansprüchen 1-5, **dadurch gekennzeichnet, daß** die lineare Trockenschrumpfung 0,1 bis 10 % beträgt.

7. Verfahren nach Ansprüchen 1-5, **dadurch gekennzeichnet, daß** die lineare Sinterschrumpfung weniger als 30 % beträgt.

8. Verfahren nach Ansprüchen 1-5, **dadurch gekennzeichnet, daß** ein dichtes SiO₂-TiO₂-Glas aus dem Formkörper durch Sinterung bei Temperaturen < 1500 °C entsteht.

9. Homogenes, binäres SiO₂-TiO₂-Glas mit geringem thermischen Ausdehnungskoeffizient.
